# EUROPEAN PATENT SPECIFICATION

(11) **EP 4 536 959 B1**
(45) Date of publication and mention of the grant of the patent: **04.03.2026**
(21) Application number: 23732809.1
(22) Date of filing: 08.06.2023
(51) Int. Cl.: F03D 1/06

(54) **A METHOD OF MAKING A WIND TURBINE BLADE COMPONENT**
VERFAHREN ZUM HERSTELLEN EINER KOMPONENTE EINES WINDKRAFTANLAGENROTORBLATTES
PROCÉDÉ DE FABRICATION D'UN COMPOSANT DE PALE D'ÉOLIENNE

(30) Priority: 10.06.2022 DK PA202270311
(43) Date of publication of application: 16.04.2025
(73) Proprietor: VESTAS WIND SYSTEMS A/S, 8200 Aarhus N (DK)
(72) Inventor: MORTIMER, Jermaine, 8200 Aarhus N (DK)
(74) Representative: Vestas Patents Department
(86) International application number: PCT/DK2023/050142
(87) International publication number: WO 2023/237170

(56) References cited:
- WO-A1-2022/105976
- US-A1- 2011 259 511
- US-A1- 2017 248 406

## Description

### Technical field

The present invention relates generally to wind turbine blades and more particularly to a method of making a wind turbine blade component.

### Background

Manufacturing components for wind turbine blades, such as blade shells and/or shear webs, often involves a moulding process. A moulding process, such as vacuum assisted resin transfer moulding (VARTM), typically involves arranging a plurality of sheets on a mould surface. For example, the component may be a laminate composite component comprising layers of reinforcing material. These layers may be formed by arranging a plurality of sheets of reinforcing material on the mould surface. Additionally or alternatively, the moulding process may involve arranging a plurality of sheets of consumable materials, such as release material or transfer film, for example.

In each example, arranging the sheets often involves overlapping edge regions of the sheets. For example, overlapping sheets of reinforcing material provides a continuous load path for distributing loads experienced by the wind turbine blade component in use. Further, overlapping sheets of consumable materials may help to control the flow of resin during the moulding process, or to ensure that the wind turbine blade component is fully releasable from the mould and/or other consumables, for example. As such, it is often advantageous to overlap sheets during manufacture of a wind turbine blade component.

However, a greater overlap between sheets of reinforcing material increases the amount of such material required to manufacture the blade component, thereby increasing the mass of the component. A greater overlap between sheets of consumable materials also increases the amount of material used, which increases cost and waste, in some examples this may also restrict the flow of resin during the moulding process. Accordingly, the sheets must be arranged such that the overlap is within a predetermined overlap tolerance.

Arranging the sheets therefore requires careful placement of the sheets on the mould surface, as well as measurement of the overlap to ensure that the overlap is within the specified overlap tolerance. Manual arrangement and in particular measurement and verification of the overlap between sheets can be time consuming and inefficient.

It is against this background that the present invention has been developed.

US2011/259511 relates to a method for, during manufacturing of a fibre-reinforced part for a wind power plant, monitoring and controlling that a plurality of layers of material comprising fibre for the manufacturing of said part are located correctly in a mould for said part and/or correctly relative to each other in the mould. WO2022/105976 relates to a method of manufacturing a wind turbine blade shear web.

### Summary

In a first aspect of the present invention there is provided a method of making a wind turbine blade component. The method comprises providing a first sheet comprising a first edge region defining a first edge. The first sheet further comprises an overlap tolerance indicator provided in the first edge region for locating a second sheet relative to the first sheet. The overlap tolerance indicator comprises a first marker located at a minimum intended overlap distance from the first edge and a second marker located at a maximum intended overlap distance from the first edge. The method further comprises providing a second sheet comprising a second edge region defining a second edge. The method further comprises arranging the second sheet with the first sheet such that the second edge region of the second sheet overlaps the first edge region of the first sheet and the second edge of the second sheet is located between the first and second markers of the overlap tolerance indicator such that the overlap tolerance indicator is partially covered by the second sheet. The overlap tolerance indicator provides a visual indication that the extent of overlap of the sheets is within a predetermined tolerance when the overlap tolerance indicator is only partially covered by the second sheet.

The method facilitates fast and simple verification of the overlap between the first and second sheets to ensure the overlap is within the predetermined overlap tolerance.

In some examples, the first marker of the overlap tolerance indicator may be spaced away from the first edge. For example, the first marker of the overlap tolerance indicator may specify that the second sheet must overlap the first sheet to some extent when the second sheet is arranged correctly relative to the first sheet.

In some examples, at least one of the sheets may be a sheet of consumable material. Further, in some examples, both the first and second sheets may be sheets of consumable materials. For example, the sheets may be sheets of transfer film, sheets of peel ply or sheets of release material. In some examples, the first and second sheets may each be a sheet of a different material. Accordingly, the overlap tolerance indicator may facilitate fast and accurate arrangement of consumable materials during manufacture of a wind turbine blade component.

In some examples, the wind turbine blade component may be a laminated composite component. In such an example, the first and second sheets may form at least part of a laminate layer of the wind turbine blade component. The method facilitates accurate arrangement of the first and second sheets to ensure that a minimum overlap is achieved to provide a suitable load path for loads experienced by the component in use, whilst also ensuring that the overlap is not too large, thereby ensuring component mass is not increased unnecessarily.

The method may further comprise providing a mould defining a mould surface. Arranging the second sheet with the first sheet may comprise arranging the first and second sheets on the mould surface. In some examples, the mould may be a male mould. Accordingly, the mould surface may be a convex mould surface.

In some examples, the second sheet may be arranged with the first sheet by hand. The method may be particularly advantageous for hand-lay up moulding processes, because the overlap tolerance indicator facilitates fast and accurate verification of the position of the second sheet relative to the first sheet using an indicator that is clearly visible to technicians.

In some examples, the overlap tolerance indicator may comprise a straight line extending between the first and second markers of the overlap tolerance indicator. Such a configuration may make the overlap tolerance indicator even more visible, making the verification of the overlap even easier.

In some examples, the method may further comprise projecting a guidance line. For example, the method may comprise projecting a guidance line using a laser. The method may further comprise arranging the first sheet with the projected guidance line such that the overlap tolerance indicator is aligned with the guidance line. This makes the initial arrangement of the first sheet particularly simple and fast, and may help to ensure that the first sheet is arranged accurately before the second sheet is arranged relative to the first sheet.

In some examples, the method may further comprise verifying the correct arrangement of the second sheet with the first sheet using a camera in an automated process to observe the overlap tolerance indicator and assess whether the second edge is arranged between the first and second markers of the overlap tolerance indicator. This may help to reduce the possibility of human error, and/or further increase the speed of the verification of the positioning of the second sheet.

In some examples the first marker may define a first end of the overlap tolerance indicator. In some examples the second marker may define a second end of the overlap tolerance indicator. As such, the overlap tolerance indicator may have a length equal to the total overlap tolerance. Using an overlap tolerance indicator configured in this way may make it particularly simple to identify whether or not the overlap is within the predetermined overlap tolerance.

In some examples, the first sheet may further comprise a third edge region defining a third edge extending transverse to the first edge. The second sheet may comprise a fourth edge region defining a fourth edge extending transverse to the second edge. The first sheet may further comprise a second overlap tolerance indicator provided in the third edge region. The second overlap tolerance indicator may comprise a first marker located at a minimum intended overlap distance from the third edge. Further, the second overlap tolerance indicator may comprise a second marker located at a maximum intended overlap distance from the third edge.

The method may further comprise arranging the second sheet with the first sheet such that the fourth edge region overlaps at least a portion of the third edge region and partially covers the second overlap tolerance indicator. For example, the fourth edge may be arranged between the first and second markers of the second overlap tolerance indicator such that the second overlap tolerance indicator provides a visual indication that the extent of overlap between the fourth edge of the second sheet and the third edge of the first sheet is within a predetermined tolerance. The use of a second overlap tolerance indicator may facilitate the verification of the position of the second sheet in two separate directions.

In some examples, the or each overlap tolerance indicator may be applied to the first sheet during a kitting process wherein the first sheet is cut to the required size. For example, the first sheet may be cut to the required size using automated, i.e. computer numerically controlled, cutting apparatus. In preferred examples, the cutting apparatus may be configured to apply the overlap tolerance indicator to the first sheet.

In preferred examples, the overlap tolerance indicator may be marked, or printed, onto the first sheet.

### Brief description of the drawings

Examples of the present invention will now be described by way of non-limiting example only, with reference to the accompanying figures, in which:
Figure 1 is a schematic exploded view of a wind turbine blade;
Figure 2 is a schematic exploded view of a mould and a plurality of sheets for arrangement during the manufacture of a wind turbine blade component;
Figure 3a is a schematic perspective view of first and second sheets arranged on the mould, with an edge region of the second sheet overlapping an edge region of the first sheet;
Figure 3b is an enlarged view showing an overlap tolerance indicator provided in the edge region of the first sheet for locating a second sheet relative to the first sheet; and
Figure 4 is a plan view of an arrangement of first and second sheets in an example where the first sheet comprises both a first and second overlap tolerance indicator.

### Detailed description

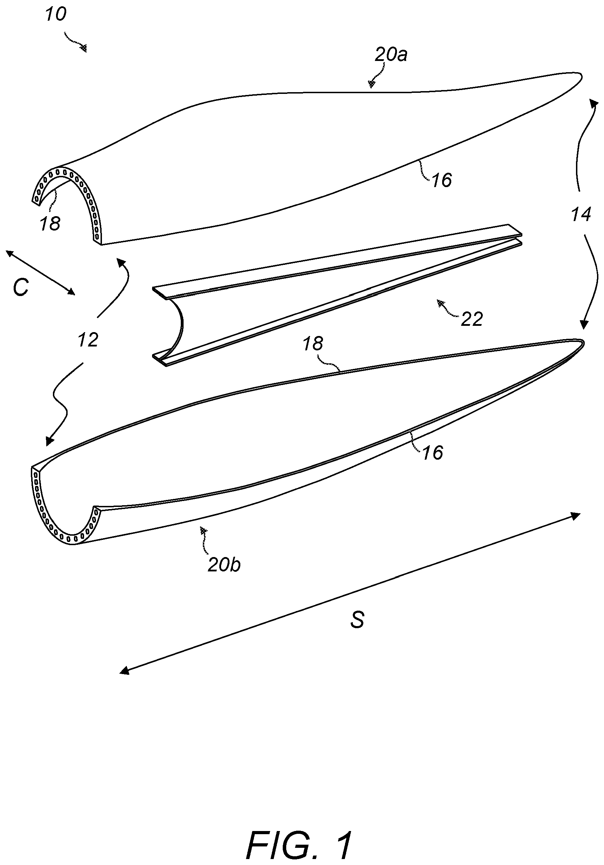

Figure 1 is a schematic exploded view of a wind turbine blade 10. The blade 10 extends in a spanwise direction (S) between a blade root 12 configured for attaching the blade 10 to a hub of a wind turbine, and a blade tip 14. The blade 10 extends between a leading edge 16 and a trailing edge 18 in a chordwise direction (C) to define an aerodynamic outer profile configured for generating lift from wind that is incident on the blade 10 in use.

The wind turbine blade 10 comprises an outer shell, and the outer shell may be formed of two half shells 20a, 20b, as shown in Figure 1 for example. The outer shell may be a composite part, for example, the half shells 20a, 20b that form the outer shell may be laminate composite components. Accordingly, each half shell 20a, 20b may comprise a plurality of laminate layers, such as layers of fibrous reinforcing material fixed in a polymer resin matrix.

Referring still to Figure 1, in some examples the wind turbine blade 10 may further comprise a shear web 22 extending longitudinally inside the outer shell. The shear web 22 may be configured to provide structural support to the outer shell in use. In some examples, the shear web 22 may be a laminate composite component. As such, the shear web 22 may comprise a plurality of laminate layers, such as layers of fibrous reinforcing material fixed in a polymer resin matrix.

The shear web 22 and the outer shell, or half shells 20a, 20b of the outer shell, are examples of wind turbine blade components that may be manufactured using the method described below with reference to the remaining figures. Whilst the following description will be provided with reference to a method of manufacturing a shear web 22, it will be appreciated that in the absence of any statement to the contrary, the following description is equally applicable to the manufacture of other wind turbine blade components, such as half shells 20a, 20b for example.

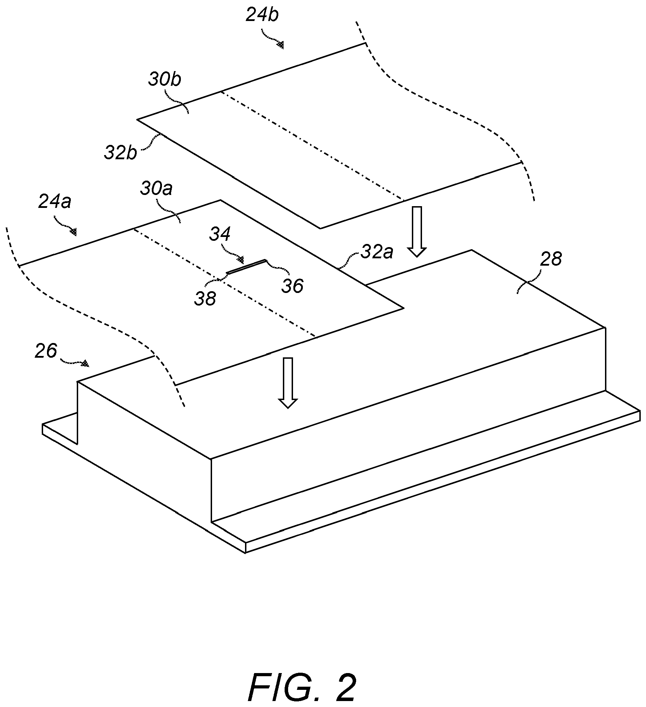

Referring initially to the exploded view of Figure 2, manufacturing the wind turbine blade component, for example the shear web 22, involves arranging a plurality of sheets of material. It will be appreciated that the method may involve arranging more than two sheets, however, for ease of reference the manufacturing method will be described in relation to a first sheet 24a and a second sheet 24b. In some examples, the sheets 24a, 24b may be consumable materials, such as sheets of transfer film or release material used in the manufacture of a wind turbine blade component. Alternatively, the sheets 24a, 24b may form at least part of a laminate layer of the wind turbine blade component. Accordingly, the sheets 24a, 24b may be sheets of reinforcing material, for example the sheets 24a, 24b may comprise reinforcing fibres such as glass fibres and/or carbon fibres.

The wind turbine blade component may be manufactured using a mould 26. Figure 2 shows a male mould 26, i.e. a mould defining a convex mould surface 28, configured for forming a shear web 22. The first and second sheets 24a, 24b may be arranged on the mould surface 28 as indicated by the arrows in Figure 2. Preferably, the first sheet 24a is arranged on the mould surface 28 first, and the second sheet 24b is subsequently arranged on the mould surface 28. The first sheet 24a comprises a first edge region 30a defining a first edge 32a, and the second sheet 24b comprises a second edge region 30b defining a second edge 32b.

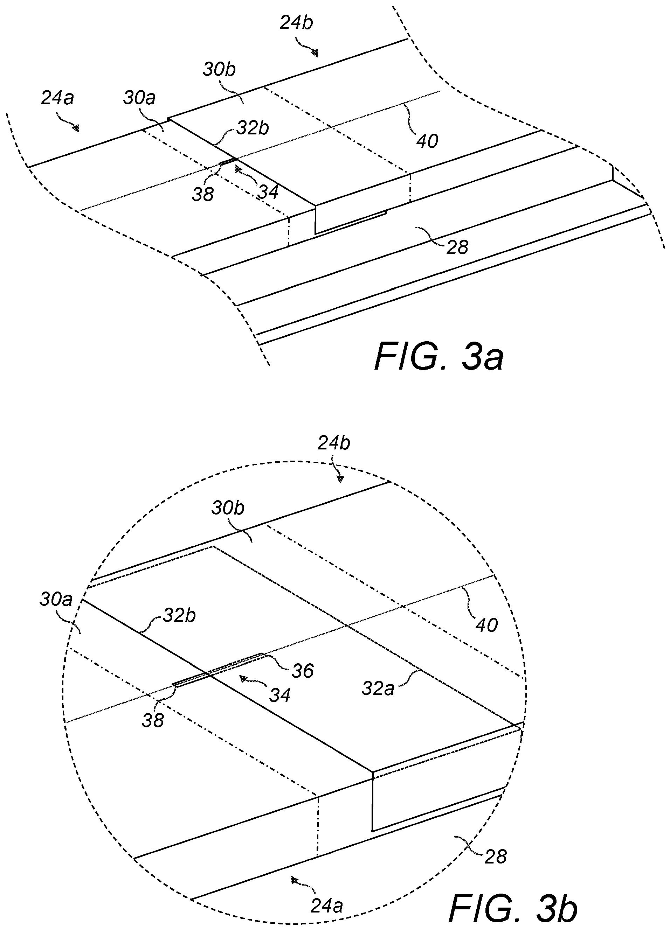

With additional reference to Figure 3a, the second sheet 24b is arranged with the first sheet 24a such that the second edge region 30b overlaps the first edge region 30a. In order to provide a visual indication of the extent of the overlap of the sheets 24a, 24b, the first sheet 24a further comprises an overlap tolerance indicator 34 provided in the first edge region 30a for locating the second sheet 24b relative to the first sheet 24a, as shown more clearly in the enlarged view of Figure 3b.

Referring to both Figures 3a and 3b, the overlap tolerance indicator 34 comprises a first marker 36 located at a minimum intended overlap distance from the first edge 32a and a second marker 38 located at a maximum intended overlap distance from the first edge 32a. The difference between the maximum intended overlap distance and the minimum intended overlap distance may be referred to as the overlap tolerance. It will be appreciated that when the second sheet 24b is arranged correctly relative to the first sheet 24a, the edge 32b of the second sheet 24b is located between the first and second markers 36, 38 of the overlap tolerance indicator 34, i.e. between the minimum intended overlap distance and the maximum intended overlap distance. Accordingly, when the extent of the overlap of the sheets 24a, 24b is within the predetermined tolerance, the overlap tolerance indicator 34 is partially covered by the second sheet 24b, i.e. at least the first marker 36 of the tolerance indicator 34 is covered by the second sheet 24b.

Notably, when the second sheet 24b is correctly arranged with the first sheet 24a, the overlap tolerance indicator 34 is only partially covered by the second sheet 24b. For example, at least the second marker 38 of the overlap tolerance indicator 34 should remain visible, i.e. not covered by the second sheet 24b. If the second sheet 24b is arranged to overlap the first sheet 24a by more than the intended maximum overlap distance, the second marker 38 of the overlap tolerance indicator 34 will be covered, indicating that the overlap is outside of the predetermined overlap tolerance.

Accordingly, manufacturing the wind turbine blade component may involve a simple overlap verification step. Such an overlap verification step can be completed by visually observing the overlap tolerance indicator 34 to give a technician an immediate indication of the accuracy in the positioning of the second sheet 24b. The overlap verification step may involve the following simple decision process: if the first marker 36 is visible, the overlap is too small; if both the first and second markers 36, 38 are covered, the overlap is too large; and if the first marker 36 is covered and the second marker 38 is visible, the overlap is within the predetermined overlap tolerance.

The overlap tolerance indicator 34 therefore provides a clear visual reference for locating the edge 32b of the second sheet 24b relative to the first sheet 24a. By providing such an indicator 34, the accuracy and speed of arranging the sheets 24a, 24b is increased. In particular, the overlap tolerance indicator 34 facilitates quick and simple verification that the second sheet 24b overlaps the first sheet 24a as intended, because the overlap can be visually verified as being in or out of tolerance, and there is no requirement to measure the overlap after arrangement of the sheets 24a, 24b.

In many examples, it may be specified that there is at least some extent of overlap between the first and second sheets 24a, 24b. As such, the minimum intended overlap distance from the first edge 32a may be greater than 0 mm, and the first marker 36 of the overlap tolerance indicator 34 may be spaced away from the first edge 32a. For example, for sheets 24a, 24b comprising 1000 g/m² biaxial glass fibre, the intended overlap may be 75 mm, with a tolerance of +/- 25 mm. In such an example, the first marker 36 may be located at 50 mm from the first edge 32a.

As shown in Figures 3a and 3b, in some examples, the first marker 36 may define a first end of the overlap tolerance indicator 34. Similarly, the second marker 38 may define a second end of the overlap tolerance indicator 34. Accordingly, in some examples, the length of the overlap tolerance indicator 34 may be equivalent to the total overlap tolerance, i.e. the difference between the maximum and minimum intended overlap distances. Configuring the overlap tolerance indicator 34 in this way provides a clear indication of the extent of the overlap which is quickly identifiable by observing the indicator.

As shown in particular in Figure 3b, in some examples the overlap tolerance indicator 34 comprises a straight line extending between the first and second markers 36, 38. Such a configuration may be useful for the initial arrangement of the first sheet 24a, i.e. for locating the first sheet 24a relative to the mould 26, as well as providing a particularly clear and easily verifiable indication of the extent of the overlap when the second sheet 24b is arranged.

Further, as shown in Figure 3a, the method may include projecting a guidance line 40 when manufacturing the wind turbine blade component. As one possible example, a laser may be used to project the guidance line 40 onto the mould surface 28. The first sheet 24a may be located on the mould surface 28 by arranging the first sheet 24a with the projected guidance line 40 such that the overlap tolerance indicator 34 is aligned with the guidance line 40. This may involve aligning the first and second markers 36, 38 of the overlap tolerance indicator 34 with the guidance line 40. In some preferred examples, as described above, the overlap tolerance indicator 34 may comprise a straight line extending between the first and second markers 36, 38, and such an indicator 34 may be particularly easy to align with a projected guidance line 40.

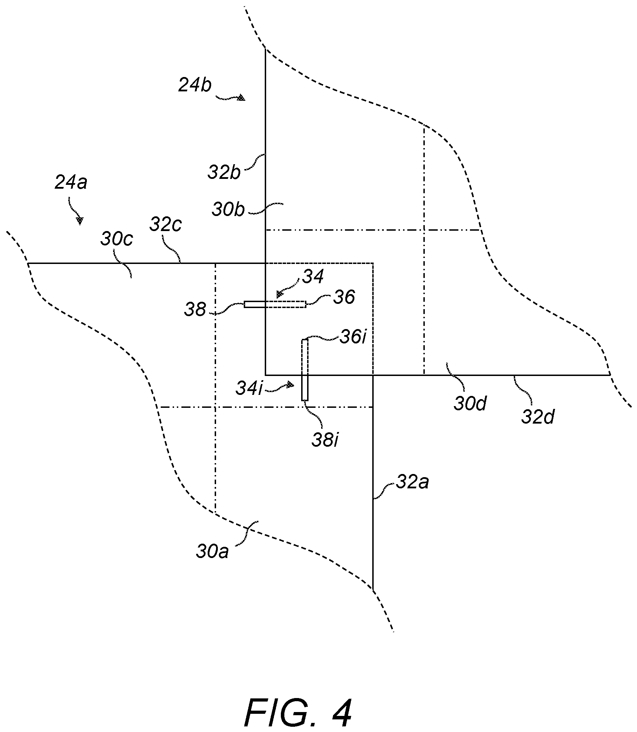

Referring now to Figure 4, which shows a plan view of an arrangement of a first and second sheet 24a, 24b, in some examples, the first sheet 24a may further comprise a third edge region 30c that defines a third edge 32c extending transverse to the first edge 32a. In a similar manner, the second sheet 24b may comprise a fourth edge region 30d that defines a fourth edge 32d extending transverse to the second edge 32b. In such an example, the first sheet 24a may comprise another overlap tolerance indicator 34i provided in the third edge region 30c and configured for locating the fourth edge 32d of the second sheet 24b relative to the first sheet 24a.

Where included, a second overlap tolerance indicator 34i may be configured in substantially the same way as the previously-described first overlap tolerance indicator 34. As such, the description of the first overlap tolerance indicator 34 provided previously applies analogously to the second overlap tolerance indicator 34i, and equivalent features will not be described in detail here to avoid repetition. For completeness, it will be appreciated that the second overlap tolerance indicator 34i may comprise a first marker 36i located at a minimum intended overlap distance from the third edge 32c and a second marker 38i located at a maximum intended overlap distance from the third edge 32c.

Similar to the process previously described with reference to the first overlap tolerance indicator 34, in examples where the first sheet 24a comprises a second overlap tolerance indicator 34i, the method of manufacturing the wind turbine blade component may include overlapping the third and fourth edge regions 30c, 30d. For example, the method may include arranging the second sheet 24b with the first sheet 24a such that the fourth edge region 30d overlaps at least a portion of the third edge region 30c and partially covers the second overlap tolerance indicator 34i. When the second sheet 24b is correctly located, the fourth edge 32d is preferable arranged between the first and second markers 36i, 38i of the second overlap tolerance indicator 34i. The second overlap tolerance indicator 34i may therefore provide a visual indication that the extent of overlap between the fourth edge 32d and the first sheet 24a is within a predetermined tolerance. The provision of a second overlap tolerance indicator 34i may facilitate accurate arrangement of the second sheet 24b relative to the first sheet 24a in two separate directions, for example, in both spanwise (S) and chordwise (C) directions.

Whilst not shown in the accompanying figures, in some examples the method may further comprise verifying the arrangement of the second sheet 24b with the first sheet 24a using a camera. The camera may be used in an automated process to observe the or each overlap tolerance indicator 34, 34i and assess whether the edge 32b, 32d of the second sheet 24b is arranged between the respective first and second markers 36, 36i and 38, 38i of a respective overlap tolerance indicator 34, 34i. As such, the camera may be used to evaluate the accuracy of the arrangement of the second sheet 24b relative to the first sheet 24a. In particular, use of a camera for verification may provide real-time feedback on sheet positioning. In some examples, a camera may be configured to evaluate a plurality of overlap tolerance indicators 34, 34i simultaneously, thereby providing a real-time assessment of the overall positioning of the second sheet 24b relative to the first sheet 24a. A positive confirmation signal, such as a green light, may be provided when the second sheet 24b is correctly arranged to overlap the first sheet 24a within the predetermined overlap tolerance indicated by the or each overlap tolerance indicator 34, 34i.

The method described herein, and in particular the use of an overlap tolerance indicator 34, is especially advantageous in examples where the second sheet 24b is arranged with the first sheet 24a by hand. Laying-up sheets 24a, 24b by hand in a moulding process introduces the possibility of human error in the accuracy of the lay-up, and previously required time consuming measuring and verification steps to ensure the sheets 24a, 24b are correctly arranged. The overlap tolerance indicator 34 provides a simple and effective visual reference to aid technicians when manually arranging the sheets 24a, 24b. The overlap tolerance indicator 34 shows a technician where to arrange the second sheet 24b, and the accuracy of the arrangement of the second sheet 24b can be verified using the overlap verification step described previously.

Whilst the description above and the accompanying figures are provided with reference to an example wherein the wind turbine blade component is a shear web 22, it will be appreciated that the method is equally applicable to the manufacture of other wind turbine blade components. In particular the above-described method may also be used to form a wind turbine blade half shell 20a, 20b. However, it will be appreciated that to form a half shell 20a, 20b, the mould 26 may be a female mould, i.e. the mould surface 28 may be a concave mould surface 28.

In the method described by way of example above, the first and second sheets 24a, 24b are arranged to form at least part of a laminate layer of a composite wind turbine blade component. The method may further comprise arranging additional sheets of material on top of the first and second sheets 24a, 24b to form additional layers of the composite wind turbine blade component. Use of an overlap tolerance indicator 34 in the first composite layer, for example on the first sheet 24a, may also be useful when arranging sheets of a subsequent laminate layer on top of the first and second sheets 24a, 24b. For example, using the overlap tolerance indicator 34 as a reference may help to ensure that subsequent sheets arranged on top of the first and second sheets 24a, 24b are arranged to overlap with their respective edges spaced away from the overlap between the first and second sheets 24a, 24b. As such, the overlaps between sheets of different laminate layers can be staggered to reduce the risk of stress concentrations forming in the composite wind turbine blade component.

As previously described, in other examples the sheets 24a, 24b may be sheets of consumable material. In yet other examples, one of the sheets 24a or 24b may be a sheet of reinforcing material, and the other sheet 24b or 24a may be a sheet of consumable material. As such, an overlap tolerance indicator 34 may be used to locate a sheet of consumable material relative to a sheet of reinforcing material.

Whilst use of a projected guidance line 40 may be advantageous for aligning the first sheet 24a with the mould 26 in some examples, it should be understood that in many examples a projected guidance line 40 may not be required. More specifically, a particular advantage of the method described herein, is that the use of an overlap tolerance indicator 34 facilitates accurate arrangement of the second sheet 24b relative to the first sheet 24a with the intended overlap without necessarily requiring a projection system, for example a laser system, to align the second sheet 24b. The second sheet 24b can be aligned relative to the first sheet 24a simply by observing the or each overlap tolerance indicator 34 when arranging the second sheet 24b. This is particularly advantageous in examples where the method comprises arranging sheets 24a, 24b on a convex mould surface 28, for example when manufacturing a shear web 22. In such an example, an overhead projection system, such as a laser, may not be able to project guidance lines onto side portions of the mould surface, i.e. surfaces extending below horizontal. Conversely, the overlap tolerance indicators 34 described above do not rely on such a projected guidance line 40 and can therefore be used to arrange the sheets 24a, 24b with the intended overlap in any position, on any part of the mould 26.

The or each overlap tolerance indicator 34 may be provided on the first sheet 24a in a plurality of different ways without departing from the scope of the invention as defined in the appended claims. For example, an overlap tolerance indicator 34 as described above may be a separate component attached to the first sheet 24a. As one possible example, the overlap tolerance indicator 34 may comprise one or more pieces of tape adhered to the first sheet 24a. Alternatively, in particularly preferred examples, the overlap tolerance indicator 34 may be printed or marked onto the first sheet 24a. This helps to ensure that the second edge region 30b of the second sheet 24b is not wrinkled or otherwise creased when it is arranged to overlap the first edge region 30a and part of the overlap tolerance indicator 34. In preferred examples, the overlap tolerance indicator 34 may be applied to the first sheet 24a during a kitting process during which the first sheet 24a is cut to the required size.

Finally, it will be appreciated that the intended overlap, and the maximum and minimum intended overlap distances may be different for different materials. Further, whilst an intended overlap of 75 mm with a tolerance of +/- 25 mm was provided above as an example of a possible intended overlap for 1000 g/m² biaxial glass fibre, it will be appreciated that the intended overlap and tolerance may be different in other examples using this material.

The description provided herein serves to demonstrate a plurality of possible examples of the present invention. It will be appreciated that features described in relation to any of the examples above may be readily combined with any other features described with reference to other examples without departing from the scope of the invention as defined in the appended claims.

## Claims

1. A method of making a wind turbine blade component, the method comprising
providing a first sheet (24a) comprising a first edge region (30a) defining a first edge (32a), the first sheet further comprising an overlap tolerance indicator (34) provided in the first edge region for locating a second sheet (24b) relative to the first sheet, the overlap tolerance indicator comprising a first marker (36) located at a minimum intended overlap distance from the first edge and a second marker (38) located at a maximum intended overlap distance from the first edge;
providing a second sheet (24b) comprising a second edge region (30b) defining a second edge (32b);
arranging the second sheet (24b) with the first sheet (24a) such that the second edge region of the second sheet overlaps the first edge region of the first sheet and the second edge of the second sheet is located between the first and second markers (36, 38) of the overlap tolerance indicator (34) such that the overlap tolerance indicator is partially covered by the second sheet;
wherein the overlap tolerance indicator (34) provides a visual indication that the extent of overlap of the sheets (24a, 24b) is within a predetermined tolerance when the overlap tolerance indicator is only partially covered by the second sheet.

2. The method of Claim 1, wherein the first marker (36) of the overlap tolerance indicator (34) is spaced away from the first edge (32a).

3. The method of Claim 1 or Claim 2, wherein the sheets (24a, 24b) are sheets of consumable materials, such as sheets of transfer film, sheets of peel ply or sheets of release material.

4. The method of Claim 1 or Claim 2, wherein the wind turbine blade component is a laminated composite component, and wherein the first and second sheets (24a, 24b) form at least part of a laminate layer of the wind turbine blade component.

5. The method of any preceding claim, wherein the method further comprises providing a mould (26) defining a mould surface (28), and wherein arranging the second sheet with the first sheet comprises arranging the first and second sheets on the mould surface.

6. The method of Claim 5, wherein the mould (26) is a male mould and wherein the mould surface (28) is a convex mould surface.

7. The method of any preceding claim, wherein the second sheet (24b) is arranged with the first sheet (24a) by hand.

8. The method of any preceding claim, wherein the overlap tolerance indicator (34) comprises a straight line extending between the first and second markers (36, 38) of the overlap tolerance indicator.

9. The method of any preceding claim, further comprising projecting a guidance line (40), for example using a laser, and arranging the first sheet with the projected guidance line such that the overlap tolerance indicator (34) is aligned with the guidance line.

10. The method of any preceding claim, further comprising verifying the correct arrangement of the second sheet (24a) with the first sheet (24b) using a camera in an automated process to observe the overlap tolerance indicator (34) and assess whether the second edge is arranged between the first and second markers of the overlap tolerance indicator.

11. The method of any preceding claim, wherein the first marker (36) defines a first end of the overlap tolerance indicator (34) and the second marker (38) defines a second end of the overlap tolerance indicator.

12. The method of any preceding claim, wherein the first sheet (24a) further comprises a third edge region (30c) defining a third edge (32c) extending transverse to the first edge, wherein the second sheet comprises a fourth edge region (30d) defining a fourth edge (32d) extending transverse to the second edge, and wherein the first sheet further comprises a second overlap tolerance indicator (34i) provided in the third edge region, the second overlap tolerance indicator comprising a first marker located at a minimum intended overlap distance from the third edge and a second marker located at a maximum intended overlap distance from the third edge, the method further comprising:
arranging the second sheet with the first sheet such that the fourth edge region overlaps at least a portion of the third edge region and partially covers the second overlap tolerance indicator, the fourth edge being arranged between the first and second markers of the second overlap tolerance indicator such that the second overlap tolerance indicator provides a visual indication that the extent of overlap between the fourth edge of the second sheet and the third edge of the first sheet is within a predetermined tolerance.

## Patentansprüche

1. Verfahren zum Herstellen einer Windkraftanlagenblattkomponente, wobei das Verfahren umfasst:
Bereitstellen einer ersten Schicht (24a), die einen ersten Kantenbereich (30a) umfasst, der eine erste Kante (32a) definiert, wobei die erste Schicht weiter einen Überlappungstoleranzindikator (34) umfasst, der im ersten Kantenbereich bereitgestellt ist, um eine zweite Schicht (24b) relativ zur ersten Schicht zu positionieren, wobei der Überlappungstoleranzindikator eine erste Markierung (36) umfasst, die sich in einem minimalen beabsichtigten Überlappungsabstand von der ersten Kante befindet, und eine zweite Markierung (38), die sich in einem maximalen beabsichtigten Überlappungsabstand von der ersten Kante befindet;
Bereitstellen einer zweiten Schicht (24b), die einen zweiten Kantenbereich (30b) umfasst, der eine zweite Kante (32b) definiert;
Anordnen der zweiten Schicht (24b) mit der ersten Schicht (24a), sodass der zweite Kantenbereich der zweiten Schicht den ersten Kantenbereich der ersten Schicht überlappt und die zweite Kante der zweiten Schicht sich zwischen der ersten und der zweiten Markierung (36, 38) des Überlappungstoleranzindikators (34) befindet, sodass der Überlappungstoleranzindikator teilweise durch die zweite Schicht bedeckt ist;
wobei der Überlappungstoleranzindikator (34) eine visuelle Anzeige bereitstellt, dass das Ausmaß der Überlappung der Schichten (24a, 24b) innerhalb einer vorbestimmten Toleranz liegt, wenn der Überlappungstoleranzindikator nur teilweise durch die zweite Schicht bedeckt ist.

2. Verfahren nach Anspruch 1, wobei die erste Markierung (36) des Überlappungstoleranzindikators (34) von der ersten Kante (32a) beabstandet ist.

3. Verfahren nach Anspruch 1 oder Anspruch 2, wobei die Schichten (24a, 24b) Schichten aus Verbrauchsmaterialien sind, wie etwa Schichten aus Transferfolie, Schichten aus Abziehlagen oder Schichten aus Trennmaterial.

4. Verfahren nach Anspruch 1 oder Anspruch 2, wobei die Windkraftanlagenblattkomponente eine laminierte Verbundkomponente ist und wobei die erste und die zweite Schicht (24a, 24b) zumindest einen Teil einer Laminatschicht der Windkraftanlagenblattkomponente bilden.

5. Verfahren nach einem vorstehenden Anspruch, wobei das Verfahren weiter Bereitstellen einer Form (26) umfasst, die eine Formoberfläche (28) definiert, und wobei das Anordnen der zweiten Schicht mit der ersten Schicht Anordnen der ersten und zweiten Schicht auf der Formoberfläche umfasst.

6. Verfahren nach Anspruch 5, wobei die Form (26) eine Patrize ist und wobei die Formoberfläche (28) eine konvexe Formoberfläche ist.

7. Verfahren nach einem vorstehenden Anspruch, wobei die zweite Schicht (24b) von Hand mit der ersten Schicht (24a) angeordnet wird.

8. Verfahren nach einem vorstehenden Anspruch, wobei der Überlappungstoleranzindikator (34) eine gerade Linie umfasst, die sich zwischen der ersten und der zweiten Markierung (36, 38) des Überlappungstoleranzindikators erstreckt.

9. Verfahren nach einem vorstehenden Anspruch, das weiter Projizieren einer Führungslinie (40), beispielsweise unter Verwendung eines Lasers, und das Anordnen der ersten Schicht mit der projizierten Führungslinie, sodass der Überlappungstoleranzindikator (34) mit der Führungslinie ausgerichtet ist, umfasst.

10. Verfahren nach einem vorstehenden Anspruch, das weiter Überprüfen der korrekten Anordnung der zweiten Schicht (24a) mit der ersten Schicht (24b) unter Verwendung einer Kamera in einem automatisierten Prozess umfasst, um den Überlappungstoleranzindikator (34) zu beobachten und zu beurteilen, ob die zweite Kante zwischen der ersten und der zweiten Markierung des Überlappungstoleranzindikators angeordnet ist.

11. Verfahren nach einem vorstehenden Anspruch, wobei die erste Markierung (36) ein erstes Ende des Überlappungstoleranzindikators (34) definiert und die zweite Markierung (38) ein zweites Ende des Überlappungstoleranzindikators definiert.

12. Verfahren nach einem vorstehenden Anspruch, wobei die erste Schicht (24a) weiter einen dritten Kantenbereich (30c) umfasst, der eine dritte Kante (32c) definiert, die sich quer zur ersten Kante erstreckt, wobei die zweite Schicht einen vierten Kantenbereich (30d) umfasst, der eine vierte Kante (32d) definiert, die sich quer zur zweiten Kante erstreckt, und wobei die erste Schicht weiter einen zweiten Überlappungstoleranzindikator (34i) umfasst, der in dem dritten Kantenbereich bereitgestellt ist, wobei der zweite Überlappungstoleranzindikator eine erste Markierung umfasst, die sich in einem minimalen beabsichtigten Überlappungsabstand von der dritten Kante befindet, und eine zweite Markierung, die sich in einem maximalen beabsichtigten Überlappungsabstand von der dritten Kante befindet, wobei das Verfahren weiter umfasst:
Anordnen der zweiten Schicht mit der ersten Schicht, sodass der vierte Kantenbereich zumindest einen Abschnitt des dritten Kantenbereichs überlappt und den zweiten Überlappungstoleranzindikator teilweise bedeckt, wobei die vierte Kante zwischen der ersten und der zweiten Markierung des zweiten Überlappungstoleranzindikators angeordnet ist, sodass der zweite Überlappungstoleranzindikator eine visuelle Anzeige bereitstellt, dass das Ausmaß der Überlappung zwischen der vierten Kante der zweiten Schicht und der dritten Kante der ersten Schicht innerhalb einer vorbestimmten Toleranz liegt.

## Revendications

1. Procédé de fabrication d'un composant de pale d'éolienne, le procédé comprenant :
la fourniture d'une première feuille (24a) comprenant une première région de bord (30a) définissant un premier bord (32a), la première feuille comprenant en outre un indicateur de tolérance de chevauchement (34) prévu dans la première région de bord pour localiser une seconde feuille (24b) par rapport à la première feuille, l'indicateur de tolérance de chevauchement comprenant un premier marqueur (36) situé à une distance de chevauchement prévue minimale du premier bord et un second marqueur (38) situé à une distance de chevauchement prévue maximale du premier bord ;
la fourniture d'une seconde feuille (24b) comprenant une deuxième région de bord (30b) définissant un deuxième bord (32b) ;
l'agencement de la seconde feuille (24b) avec la première feuille (24a) de telle sorte que la deuxième région de bord de la seconde feuille chevauche la première région de bord de la première feuille et que le deuxième bord de la seconde feuille soit situé entre les premier et second marqueurs (36, 38) de l'indicateur de tolérance de chevauchement (34) de telle sorte que l'indicateur de tolérance de chevauchement soit partiellement recouvert par la seconde feuille ;
dans lequel l'indicateur de tolérance de chevauchement (34) fournit une indication visuelle que l'étendue de chevauchement des feuilles (24a, 24b) est dans une tolérance prédéterminée lorsque l'indicateur de tolérance de chevauchement n'est que partiellement recouvert par la seconde feuille.

2. Procédé selon la revendication 1, dans lequel le premier marqueur (36) de l'indicateur de tolérance de chevauchement (34) est espacé du premier bord (32a).

3. Procédé selon la revendication 1 ou la revendication 2, dans lequel les feuilles (24a, 24b) sont des feuilles de matériaux consommables, telles que des feuilles de film de transfert, des feuilles de couche d'arrachage ou des feuilles de matériau antiadhésif.

4. Procédé selon la revendication 1 ou la revendication 2, dans lequel le composant de pale d'éolienne est un composant composite stratifié, et dans lequel les première et seconde feuilles (24a, 24b) forment au moins une partie d'une couche stratifiée du composant de pale d'éolienne.

5. Procédé selon une quelconque revendication précédente, dans lequel le procédé comprend en outre une fourniture d'un moule (26) définissant une surface de moule (28), et dans lequel l'agencement de la seconde feuille avec la première feuille comprend un agencement des première et seconde feuilles sur la surface de moule.

6. Procédé selon la revendication 5, dans lequel le moule (26) est un moule mâle et dans lequel la surface de moule (28) est une surface de moule convexe.

7. Procédé selon une quelconque revendication précédente, dans lequel la seconde feuille (24b) est agencée avec la première feuille (24a) à la main.

8. Procédé selon une quelconque revendication précédente, dans lequel l'indicateur de tolérance de chevauchement (34) comprend une ligne droite s'étendant entre les premier et second marqueurs (36, 38) de l'indicateur de tolérance de chevauchement.

9. Procédé selon une quelconque revendication précédente, comprenant en outre une projection d'une ligne de guidage (40), par exemple à l'aide d'un laser, et un agencement de la première feuille avec la ligne de guidage projetée de telle sorte que l'indicateur de tolérance de chevauchement (34) soit aligné avec la ligne de guidage.

10. Procédé selon une quelconque revendication précédente, comprenant en outre une vérification de l'agencement correct de la seconde feuille (24a) avec la première feuille (24b) à l'aide d'une caméra dans un processus automatisé pour observer l'indicateur de tolérance de chevauchement (34) et évaluer si le deuxième bord est agencé entre les premier et second marqueurs de l'indicateur de tolérance de chevauchement ou non.

11. Procédé selon une quelconque revendication précédente, dans lequel le premier marqueur (36) définit une première extrémité de l'indicateur de tolérance de chevauchement (34) et le second marqueur (38) définit une seconde extrémité de l'indicateur de tolérance de chevauchement.

12. Procédé selon une quelconque revendication précédente, dans lequel la première feuille (24a) comprend en outre une troisième région de bord (30c) définissant un troisième bord (32c) s'étendant transversalement au premier bord, dans lequel la seconde feuille comprend une quatrième région de bord (30d) définissant un quatrième bord (32d) s'étendant transversalement au deuxième bord, et dans lequel la première feuille comprend en outre un second indicateur de tolérance de chevauchement (34i) prévu dans la troisième région de bord, le second indicateur de tolérance de chevauchement comprenant un premier marqueur situé à une distance de chevauchement minimale prévue du troisième bord et un second marqueur situé à une distance de chevauchement maximale prévue du troisième bord, le procédé comprenant en outre :
l'agencement de la seconde feuille avec la première feuille de telle sorte que la quatrième région de bord chevauche au moins une partie de la troisième région de bord et recouvre partiellement le second indicateur de tolérance de chevauchement, le quatrième bord étant disposé entre les premier et second marqueurs du second indicateur de tolérance de chevauchement de telle sorte que le second indicateur de tolérance de chevauchement fournit une indication visuelle que l'étendue du chevauchement entre le quatrième bord de la seconde feuille et le troisième bord de la première feuille est dans une tolérance prédéterminée.
